(19) **Europäisches Patentamt / European Patent Office / Office européen des brevets**

(11) **EP 2 726 904 B1**

(12) **FASCICULE DE BREVET EUROPEEN**

(45) Date de publication et mention
de la délivrance du brevet:
**29.07.2015 Bulletin 2015/31**

(21) Numéro de dépôt: **12731401.1**

(22) Date de dépôt: **27.06.2012**

(51) Int Cl.:
**G01T 1/178** (2006.01)

(86) Numéro de dépôt international:
**PCT/EP2012/062410**

(87) Numéro de publication internationale:
**WO 2013/000933 (03.01.2013 Gazette 2013/01)**

(54) **PROCÉDÉ D'ÉVALUATION DE LA DOSE DE TRITIUM INTÉGRÉE PAR UN INDIVIDU SANS PRÉLÈVEMENT DE FLUIDE CORPOREL APRÈS EXPOSITION À UN ENVIRONNEMENT COMPRENANT DU TRITIUM**

VERFAHREN ZUR BESTIMMUNG DER MENGE DER TRITIUMABSORPTION EINER PERSON NACH EINER EXPOSITION IN EINER TRITIUMHALTIGEN UMGEBUNG OHNE ENTNAHME VON KÖRPERFLÜSSIGKEIT

METHOD FOR EVALUATING THE AMOUNT OF TRITIUM ABSORBED BY A PERSON AFTER EXPOSURE TO AN ENVIRONMENT CONTAINING TRITIUM WITHOUT DRAWING BODY FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2011 FR 1155905**

(43) Date de publication de la demande:
**07.05.2014 Bulletin 2014/19**

(73) Titulaire: **Commissariat à l'Énergie Atomique et aux Énergies Alternatives
75015 Paris (FR)**

(72) Inventeur: **DOUCHE, Christophe
F-21121 Darois (FR)**

(74) Mandataire: **Ahner, Philippe
BREVALEX
95, rue d'Amsterdam
75378 Paris Cedex 8 (FR)**

(56) Documents cités:
**DE-A1- 19 527 097    FR-A1- 2 918 752
GB-A- 1 281 403**

- **TSUJIMITO T., NISHIZONO T., TAMURA K.: "Simple Internal Exposure Measurement for Tritium by Expiratory Water Trapping Method Using Water Bubbler", PROCEEDINGS OF THE INTERNATIONAL RADIATION PROTECTION ASSOCIATION, vol. IRPA 10, no. P-3a-167, mai 2000 (2000-05), pages 1-5, XP002669034, Hiroshima**
- **OSBORNE R.V.: "Sampling for tritiated water vapour", PROCEEDINGS OF THE INTERNATIONAL RADIATION PROTECTION ASSOCIATION, vol. IRPA 3, septembre 1973 (1973-09), pages 1428-1433, XP002669035, Washington**

**Description**

**DOMAINE TECHNIQUE**

La présente invention a trait à un procédé d'évaluation de la dose de tritium intégrée par un individu confronté à un milieu présentant une ambiance en tritium.

Plus précisément, elle se rapporte à un procédé d'évaluation de la dose de tritium intégrée dans l'organisme de cet individu sans que cela nécessite le prélèvement de l'un de ses fluides corporels.

L'invention trouve notamment application dans le suivi dosimétrique du tritium d'individus confrontés, dans leurs activités, à un environnement comprenant du tritium, tel que cela est le cas dans l'industrie nucléaire.

**ÉTAT DE LA TECHNIQUE ANTÉRIEURE**

Le tritium, de formule chimique $^3$H, est un isotope de l'hydrogène présent en permanence dans l'environnement sous la forme d'eau tritiée, de matière organique tritiée ou encore sous la forme de tritium gazeux.

Le tritium est naturellement issu de l'interaction entre les rayonnements cosmiques et l'atmosphère mais peut également être obtenu de manière artificielle.

Actuellement, la production de tritium d'origine artificielle dans l'environnement provient des émissions des réacteurs nucléaires, des rejets des usines de traitement des combustibles nucléaires ou encore de la fabrication d'armes thermonucléaires.

Le risque encouru par un individu exposé à une source de tritium n'est pas lié à une éventuelle contamination « externe à l'organisme », c'est-à-dire une contamination impliquant une action externe du tritium sur l'organisme, puisque le rayonnement ionisant émis par le tritium n'est pas suffisamment intense pour franchir la barrière de la peau ou de la cornée.

Le tritium est, au contraire, susceptible d'atteindre l'organisme d'un individu par une voie « interne à l'organisme », c'est-à-dire par ses voies respiratoire, cutanée et/ou digestive.

Afin de répondre aux exigences réglementaires, un suivi régulier de la dose de tritium intégrée par les travailleurs du secteur du tritium est réalisé au moyen de prélèvements et d'analyses de fluides corporels, notamment d'urine.

Actuellement, l'analyse par spectroscopie à scintillation liquide des prélèvements d'urine de ces travailleurs est une technique bien maîtrisée et très répandue. Elle consiste, en mélangeant l'urine tritiée à un liquide de scintillation, à transformer les rayonnements ionisants issus des désintégrations radioactives du tritium en lumière aisément détectable et quantifiable par spectroscopie.

Toutefois, dans ce type de procédé alliant un prélèvement d'urine à une analyse par spectroscopie à scintillation liquide, il est généralement nécessaire, pour effectuer le prélèvement d'urine, d'attendre que l'équilibre des fluides corporels soit atteint au sein de l'organisme de l'individu, ce qui équivaut à un temps d'attente d'environ deux heures après son exposition à un environnement tritié.

De plus, l'urine, étant un prélèvement biologique, doit obligatoirement, une fois prélevée, être analysée par un laboratoire d'analyses médicales.

Par conséquent, un tel procédé ne permet donc pas d'accéder rapidement à une quantification de la dose de tritium intégrée dans l'organisme dudit individu, ce qui peut s'avérer préjudiciable pour un individu en visite dans des locaux à ambiance tritium.

Le document Proceedings of the international radiation protection association, IPRA 10, P-3a-167 (2000-05), 1-5 décrit un procédé d'évaluation de la dose de tritium intégrée par un individu impliquant la mise en oeuvre des étapes principales suivantes :

- une étape de piégeage, dans un dispositif de barbotage, de l'eau expirée par l'individu confronté à un environnement tritié ;
- une étape de mesure, par scintillation liquide, de l'activité du tritium (paramètre Ec) compris dans l'eau ainsi piégée dans ledit dispositif; et
- une étape d'évaluation de la dose de tritium par le biais d'une équation mathématique spécifique faisant intervenir ledit paramètre Ec.

Ce procédé implique, donc, une participation active de la part de l'individu confronté à l'environnement tritié pour la mise en oeuvre de l'étape de piégeage.

Le document GB 1 281403 décrit un dispositif de contrôle d'un environnement tritié par mesure continue de l'activité du tritium contenu dans la vapeur d'eau de l'air, le dispositif mettant en oeuvre un circuit ouvert dans lequel circule de l'air, un circuit fermé dans lequel circule de l'eau, un échantillonneur gazeux reliant les circuits et permettant à l'air du premier circuit de buller dans l'eau du second circuit, ainsi qu'un appareil de mesure de la radioactivité de l'eau de ce second circuit (p.1, l.34-52).

Ce document ne propose, en aucun cas, d'estimer la dose de tritium intégrée par un individu confronté à un environnement tritié.

Pour surmonter les inconvénients susmentionnés, les inventeurs se sont fixé pour but de mettre au point un procédé permettant une estimation rapide de la dose de tritium intégrée par un individu exposé à un environnement tritié.

Ils se sont également fixé pour objectif que ce procédé ne nécessite pas le prélèvement de fluides corporels et qu'il puisse être mis en pratique de manière autonome, c'est-à-dire sans avoir à faire appel à un organisme externe tel qu'un laboratoire d'analyses médicales.

## EXPOSÉ DE L'INVENTION

Ces buts et d'autres encore sont atteints par la présente invention pour laquelle les inventeurs ont constaté qu'il est possible d'estimer la dose de tritium intégrée par un individu confronté à un environronnement tritié, sans qu'il soit nécessaire de procéder à un prélèvement de fluide corporel dudit individu.

L'invention a ainsi trait à un procédé d'évaluation de la dose de tritium intégrée par un individu (notée « Dose » dans ce qui suit et exprimée en Sievert (Sv)) après exposition dudit individu pendant une durée $\tau$ (exprimée en heures (h)) à un environnement tritié, ledit procédé comprenant les étapes suivantes :

a) une étape de mesure de l'activité volumique du tritium (notée $C_{HTO}$ et exprimée en Becquerel par litre (Bq/L)) présent dans ledit environnement ;
b) une étape d'estimation de la dose intégrée par ledit individu au moyen de la relation suivante :

$$\text{Dose} = C_{HTO} \times \tau \times DPUI_{HTO} \times 1800,$$

dans laquelle :

- $C_{HTO}$ correspond à l'activité volumique du tritium (exprimée en Becquerel par litre (Bq/L)) mesurée à l'étape a) susmentionnée ; et
- $DPUI_{HTO}$, est égal à $1{,}8 \cdot 10^{-11}$ Sievert par Becquerel (Sv/Bq).

D'un point de vue pratique, $DPUI_{HTO}$ correspond au coefficient de dose efficace par unité d'incorporation pour la vapeur d'eau tritiée (également communément désigné par l'expression « facteur de dose »).

Afin de garantir une meilleure compréhension des travaux menés par les inventeurs, on se propose d'apporter dans les paragraphes suivants des informations complémentaires relatives au domaine du tritium.

On rappelle ainsi que le tritium est un isotope radioactif qui se désintègre en dégageant de l'énergie sous forme de rayonnements bêta ($\beta^-$), c'est-à-dire en émettant un électron et un antineutrino.

Aussi, on entend par « dose de tritium intégrée par un individu », la dose de tritium que les inventeurs souhaitent évaluer et qui est susceptible d'être intégrée par un individu à l'issue de son exposition à l'environnement tritié pendant une durée d'exposition $\tau$ (exprimée en heures (h)). Cette grandeur physique s'exprime en Sievert (Sv).

Enfin, on emploie l'expression « environnement tritié » pour désigner un environnement comprenant du tritium. En remplacement de cette expression, il peut être utilisé dans cette demande les expressions « environnement comprenant du tritium », « environnement à ambiance tritium » ou encore tout simplement « ambiance tritium ».

Comme mentionné ci-dessus, la présente invention a trait à un procédé qui se déroule en deux étapes et qui permet d'estimer, par une mesure de l'activité volumique du tritium présent dans l'environnement tritié auquel est confronté l'individu, la dose de tritium que celui-ci est susceptible d'avoir intégré dans son organisme.

La première étape, ou étape a), consiste donc à mesurer l'activité volumique du tritium (exprimée en Becquerel par litre (Bq/L)) présent dans l'environnement tritié dans lequel se trouve l'individu pendant la durée d'exposition $\tau$.

Cette étape peut notamment consister à faire barboter, à débit constant, pendant ladite durée $\tau$, dans un dispositif de barbotage, l'air de l'environnement tritié dans un volume d'eau donnée, à mesurer l'activité du tritium (exprimée en Becquerel (Bq)) piégé dans ledit volume d'eau, par exemple par spectroscopie à scintillation liquide, puis à en déduire l'activité volumique du tritium (notée $C_{HTO}$ et exprimée en Becquerel par litre (Bq/L)) présent dans l'environnement tritié au moyen de la relation suivants :

$$C_{HTO} = \frac{I_{HTO}}{\eta \times V},$$

dans laquelle :

- $I_{HTO}$ est l'activité du tritium (exprimée en Becquerel (Bq)) piégé dans le volume d'eau susmentionné ;
- $\eta$ est le rendement de piégeage du tritium dans ce volume d'eau (qui est fonction du dispositif de barbotage utilisé), qui peut être compris entre 0,8 et 1 ; et
- V est le volume d'air (exprimé en litres (L)) qui a circulé dans le volume d'eau susmentionné.

On entend par « rendement de piégeage du tritium » le rapport $\eta$ de l'activité du tritium piégé dans l'eau par barbotage à l'activité du tritium contenu dans le volume d'air V qui a circulé dans le volume d'eau susmentionné.

La spectroscopie à scintillation liquide est une technique qui consiste, après mélange d'une solution radioactive tritiée avec un liquide de scintillation, à transformer les rayonnements ionisants consécutifs aux désintégrations radioactives du tritium en lumière aisément détectable et quantifiable par spectroscopie.

La seconde étape du procédé, ou étape b), permet d'estimer la dose intégrée par ledit individu au moyen de la relation suivants :

$$\text{Dose} = C_{HTO} \times \tau \times DPUI_{HTO} \times 1800,$$

dans laquelle $C_{HTO}$ correspond à l'activité volumique du tritium (exprimée en Becquerel par litre (Bq/L)) présent dans l'environnement tritié qui est mesurée lors de la première étape, ou étape a).

Dans cette relation, la valeur « 1800 » correspond, comme on le définira dans l'exemple ci-dessous, à un débit moyen de pénétration de l'air de l'environnement tritié dans l'organisme de l'individu.

Cette valeur s'exprime donc en litres par heure (L/h) et signifie que l'individu présent dans un environnement tritié absorbe, par ses voies respiratoire et cutanée, 1800 litres d'air de l'environnement tritié par heure dans son organisme.

D'autres caractéristiques et avantages de l'invention apparaîtront du complément de description qui suit et qui se rapporte à une démonstration de la démarche suivie par les inventeurs pour mettre au point le procédé d'estimation de la dose de tritium intégrée par l'individu précédemment décrit, suivie d'un exemple d'application dudit procédé.

Bien entendu, ce complément de description n'est donné qu'à titre d'illustration de l'invention et n'en constitue en aucun cas une limitation.

## BRÈVE DESCRIPTION DES DESSINS

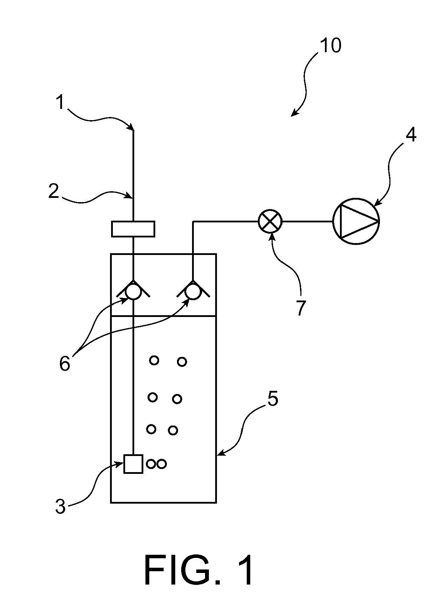

La Figure 1 est une représentation schématique du dispositif de barbotage portatif utilisé par les inventeurs dans le but d'évaluer l'activité volumique du tritium présent dans l'environnement du ou des locaux visités par un individu.

## EXPOSÉ DÉTAILLÉ DU MODE DE RÉALISATION PARTICULIER

**Exemple : Évaluation de la dose de tritium $^3$H intégrée par un individu ayant séjourné pendant une durée $\tau$ dans un local à environnement tritié**

Pour évaluer la dose de tritium intégrée par l'individu à l'issue de sa visite dans des locaux à environnement tritié, on détermine d'abord, au moyen d'un dispositif de barbotage portatif 10 illustré schématiquement sur la Figure 1, l'activité volumique du tritium présent dans l'environnement tritié, dans lequel l'individu s'est trouvé pendant sa visite pendant une durée d'exposition $\tau$.

Ce dispositif expérimental 10 comprend, comme l'indique la Figure 1, une entrée d'air 1 menant à un conduit 2 doté à son extrémité d'un diffuseur d'air 3 qui, par actionnement d'une pompe 4, assure le barbotage de l'air de l'environnement tritié dans 100 mL d'eau remplissant un réservoir 5 de 150 mL.

Il est également équipé de deux clapets à flotteur 6 permettant le contrôle du niveau d'eau du réservoir 5, et d'un appareil 7 mesurant le volume d'air ayant traversé le dispositif pendant la durée $\tau$ de présence de l'individu dans le local.

Ce dispositif, que l'individu porte à la ceinture pendant sa visite, est mis en marche dès son entrée dans le local et arrêté dès que celui-ci le quitte. Il suffit pour cela de mettre en marche et d'arrêter la pompe 4, le débit d'entrée d'air étant fixé par le débit volumique de la pompe, ce débit étant constant.

Simultanément à la visite du local, le dispositif portatif mis en marche permet donc un barbotage de l'air de l'environnement tritié dans les 100 mL d'eau du réservoir 5, moyennant quoi le tritium qui est présent dans l'air aspiré par la pompe 4 se retrouve piégé dans l'eau du réservoir.

Le tritium présent dans l'air existe en réalité sous deux formes principales : sous forme gazeuse (notée HT) et sous une forme de vapeur d'eau tritiée (notée HTO).

Comme le coefficient de dose (ou facteur de dose) de la forme HT (égal à 1,8 • $10^{-15}$ Sv/Bq) est 10 000 fois plus faible que le coefficient de dose (ou facteur de dose) de la forme HTO (égal à 1,8 • $10^{-11}$ Sv/Bq), la contribution du tritium sous forme HT dans la dose réelle de tritium $^3$H intégrée par l'individu à l'issue de son séjour dans le local à environnement tritié est considérée comme négligeable devant la contribution de la forme HTO.

Ainsi, dans ce qui suit, on part du principe que l'activité volumique du tritium présent dans l'environnement tritié équivaut à l'activité volumique du tritium sous forme de vapeur d'eau tritiée (notée ci-après $C_{HTO}$).

Dès lors que l'individu quitte le local et que le dispositif est arrêté, on prélève un volume $V_p$ d'eau du réservoir, volume pouvant s'échelonner de 1 à 10 mL.

Le volume $V_p$ prélevé est ensuite transvasé dans un flacon de dosage de 20 mL, où il est ensuite mélangé avec 10 mL de liquide de scintillation. On quantifie ensuite l'activité du tritium $A_{HTO}$ par spectroscopie à scintillation liquide.

Connaissant le volume d'eau $V_{rés}$ présent dans le réservoir à l'issue du barbotage et l'activité du tritium $A_{HTO}$ dans le volume $V_p$ d'eau prélevé, on en déduit aisément l'activité totale du tritium piégé dans le réservoir, notée $I_{HTO}$, par la relation suivants :

$$I_{HTO} = \frac{A_{HTO}}{V_p} \times V_{rés},$$

dans laquelle $I_{HTO}$ s'exprime en Becquerel (Bq), $A_{HTO}$ en Becquerel (Bq), $V_p$ en litres (L) et $V_{rés}$ en litres (L).

Comme on a déterminé l'activité totale du tritium présent dans le réservoir $I_{HTO}$, on accède à une estimation de l'activité volumique du tritium (notée $C_{HTO}$ et exprimée en Becquerel par litre (Bq/L)) présent dans l'environnement tritié par la relation suivants :

$$C_{HTO} = \frac{I_{HTO}}{V \times \eta}$$

dans laquelle :

-    V correspond au volume d'air (exprimé en litres (L)) ayant circulé dans le réservoir pendant la durée de visite T (exprimée en heures (h)) ; et
-    $\eta$ correspond au rendement de piégeage du dispositif, égal à 0,8 dans ce cas de figure.

L'activité volumique du tritium présent dans l'environnement tritié $C_{HTO}$ étant maintenant connue, on cherche à estimer la dose de tritium que l'individu a intégrée dans son organisme lors de sa visite.

Pour cela, on considère la quantité totale du tritium, qui a pénétré dans l'organisme de l'individu par la voie respiratoire et par la voie cutanée, à des taux respectifs de 2/3 et 1/3 (dans le cas d'un individu qui n'a pas d'équipement de protection).

Étant donné que le débit respiratoire moyen d'un individu normal, noté $D_{resp}$, est égal à 1200 litres par heure (L/h), on détermine un débit moyen de pénétration de l'air de l'environnement tritié dans l'organisme, noté $D_p$, par la relation suivants :

$$D_p = D_{resp} + D_{cutanée} = D_{resp} + \frac{D_{resp}}{2} = 1200 + 600 = 1800 \text{ L/h}.$$

L'activité du tritium intégré par l'individu effectuant une visite dans un local à environnement tritié, notée $I_{int}$ et exprimée en Becquerel (Bq), n'est autre que le produit de l'activité volumique $C_{HTO}$ du tritium présent dans l'environnement tritié par le débit de pénétration du tritium dans l'organisme et par la durée $\tau$ d'exposition à l'environnement tritié, soit par la relation suivants :

$$I_{int} = C_{HTO} \times \tau \times 1800.$$

La dose intégrée par cet individu, notée « Dose » et exprimée en Sievert (Sv), est enfin déterminée par le produit de l'activité du tritium intégré par l'individu $I_{int}$ par le coefficient de dose du tritium sous sa forme de vapeur d'eau $DPUI_{HTO}$, soit la relation suivants :

$$\text{Dose} = I_{int} \times DPUI_{HTO},$$

ou en d'autres termes :

$$\text{Dose} = C_{HTO} \times \tau \times 1800 \times DPUI_{HTO}.$$

Au moyen de l'ensemble des relations précédentes, on détermine ainsi la dose intégrée par un individu ayant effectué une visite d'un local à environnement tritié, pendant une durée $\tau$, par la relation générale suivants :

$$\text{Dose} = \frac{A_{HTO} \times V_{rés} \times 1800 \times DPUI_{HTO} \times \tau}{V_p \times V \times \eta},$$

dans laquelle :

-  $A_{HTO}$ est l'activité du tritium (exprimée en Becquerel (Bq)) présent dans le volume $V_p$ (exprimé en litres (L)) d'eau qui est prélevé du réservoir contenant un volume $V_{rés}$ (exprimé en litres (L)) d'eau ;
-  $DPUI_{HTO}$, est le coefficient de dose du tritium sous la forme de vapeur d'eau, et égal à $1,8 \cdot 10^{-11}$ Sievert par Becquerel (Sv/Bq) ;
-  $\tau$ est la durée de la visite du local à environnement tritié (exprimée en heures (h)) ;
-  V est le volume total d'air de l'environnement tritié aspiré par le dispositif de barbotage pendant la visite (exprimé en litres (L)) ; et
-  $\eta$ est le rendement de piégeage du tritium présent dans l'environnement tritié dans l'eau du dispositif de barbotage.

Ainsi, dans le présent exemple, pour un volume d'eau prélevé $V_p$ de 10 mL, un volume d'eau dans le réservoir $V_{rés}$ égal à 100 mL, un rendement de piégeage $\eta$ de 0,8, une activité du tritium $A_{HTO}$ mesurée par spectroscopie à scintillation liquide égale à 1 Becquerel (Bq) et une durée de visite $\tau$ d'une heure, la dose de tritium intégrée par le visiteur est estimée à 0,04 microSievert ($\mu$Sv).

**Revendications**

1.  Procédé d'évaluation de la dose de tritium intégrée par un individu (exprimée en Sievert (Sv)) après exposition dudit individu pendant une durée $\tau$ (exprimée en heures (h)) à un environnement tritié, ledit procédé comprenant les étapes suivantes.

   a) une étape de mesure de l'activité volumique du tritium (notée $C_{HTO}$ et exprimée en Becquerel par litre (Bq/L)) présent dans ledit environnement ;
   b) une étape d'estimation de la dose intégrée par ledit individu au moyen de la relation suivante :

$$\text{Dose} = C_{HTO} \times \tau \times DPUI_{HTO} \times 1800,$$

dans laquelle :

   - $C_{HTO}$ correspond à l'activité volumique du tritium (exprimée en Becquerel par litre (Bq/L)) mesurée à l'étape a) susmentionnée ; et
   - $DPUI_{HTO}$, est égal à $1,8 \cdot 10^{-11}$ Sievert par Becquerel (Sv/Bq).

**2.** Procédé selon la revendication 1, dans lequel l'étape a) consiste à faire barboter, à débit constant, pendant ladite durée $\tau$, dans un dispositif de barbotage, l'air de l'environnement tritié dans un volume d'eau donnée, à mesurer l'activité du tritium (exprimée en Becquerel (Bq)) piégé dans ledit volume d'eau, puis à en déduire l'activité volumique du tritium (notée $C_{HTO}$ et exprimée en Becquerel par litre (Bq/L)) présent dans l'environnement tritié au moyen de la relation suivants :

$$C_{HTO} = \frac{I_{HTO}}{\eta \times V},$$

dans laquelle :

- $I_{HTO}$, est l'activité du tritium (exprimée en Becquerel (Bq)) piégé dans le volume d'eau susmentionné ;
- $\eta$ est le rendement de piégeage du tritium dans ce volume d'eau ; et
- V est le volume d'air (exprimé en litres (L)) qui a circulé dans le volume d'eau susmentionné.

**3.** Procédé selon la revendication 2, dans lequel $\eta$ est compris entre 0,8 et 1.

**Patentansprüche**

**1.** Verfahren zum Bestimmen der Dosis der Tritiumabsorption einer Person (ausgedrückt in Sievert (Sv)) nach einer Exposition der Person in einer tritiumhaltigen Umgebung für eine Zeitdauer $\tau$ (ausgedrückt in Stunden (h)), wobei das Verfahren die nachfolgenden Schritte umfasst:

a) einen Schritt des Messens der Aktivitätskonzentration von Tritium (mit $C_{HTO}$ bezeichnet und in Becquerel pro Liter (Bq/L) ausgedrückt), die in der Umgebung vorhanden ist;
b) einen Schritt des Abschätzens der von der Person absorbierten Dosis mittels des nachfolgenden Verhältnisses:

$$\text{Dosis} = C_{HTO} \times \tau \times DPUI_{HTO} \times 1800,$$

wobei

- $C_{HTO}$ der in dem oben genannten Schritt a) gemessenen Aktivitätskonzentration von Tritium (ausgedrückt in Becquerel pro Liter (Bq/L)) entspricht; und
- $DPUI_{HTO}$ gleich $1,8 \cdot 10^{-11}$ Sievert pro Becquerel (Sv/Bq) ist.

**2.** Verfahren nach Anspruch 1, wobei der Schritt a) darin besteht, Luft aus der tritiumhaltigen Umgebung für die Zeitdauern $\tau$ in ein gegebenes Wasservolumen in einer Blasenbildungsvorrichtung mit konstanter Durchsatzmenge einzublasen, die Aktivität von in dem Wasservolumen aufgefangenen Tritium (ausgedrückt in Becquerel (Bq)) zu messen, dann davon die Aktivitätskonzentration von Tritium (mit $C_{HTO}$ bezeichnet und in Becquerel pro Liter (Bq/L) ausgedrückt) abzuleiten, das in der tritiumhaltigen Umgebung vorhanden ist, und zwar mittels des nachfolgenden Verhältnisses:

$$C_{HTO} = \frac{I_{HTO}}{\eta x V}$$

worin

- $I_{HTO}$ die Aktivität von Tritium (ausgedrückt in Becquerel (Bq)) ist, das in dem vorgenannten Wasservolumen aufgefangen ist,

- η der Auffangwirkungsgrad zum Auffangen von Tritium in diesem Wasservolumen ist; und
- V das Luftvolumen (ausgedrückt in Liter (L)) ist, das in dem vorgenannten Wasservolumen zirkuliert ist.

**3.** Verfahren nach Anspruch 2, wobei $\tau$ zwischen 0,8 und 1 beträgt.

**Claims**

**1.** Method for estimating the tritium dose (expressed in Sieverts (Sv)) absorbed by a person after exposure of said person to a tritiated environment for a duration $\tau$ (expressed in hours (h)), said method comprising the following steps:

a) a step to measure the activity per unit volume of tritium present in said environment (denoted $C_{HTO}$ and expressed in Becquerel per litre (Bq/L));
b) a step to estimate the dose absorbed by said person, using the following relation:

$$\text{Dose} = C_{HTO} \times \tau \times DPUI_{HTO} \times 1800,$$

in which:

- $C_{HTO}$ is the activity per unit volume of tritium (expressed in Becquerel per litre (Bq/1)) measured in the previous step a); and
- $DPUI_{HTO}$ is equal to $1.8 \times \cdot 10^{-11}$ Sieverts per Becquerel (Sv/Bq).

**2.** Method according to claim 1, in which step a) consists of bubbling air from the tritiated environment in a given volume of water in a bubbler at constant rate during said duration $\tau$, measuring the activity of tritium (expressed in Becquerel (Bq)) trapped in said volume of water, and then deducing the activity per unit volume of tritium present in the tritiated environment (denoted $C_{HTO}$ and expressed in Becquerel per litre (Bq/L)) using the following relation:

$$C_{HTO} = \frac{I_{HTO}}{\eta \times V},$$

in which:

- $I_{HTO}$ is the activity of tritium (expressed in Becquerel (Bq)) trapped in the volume of water mentioned above;
- $\eta$ is the efficiency at which tritium is trapped in this volume of water; and
- V is the volume of air (expressed in litres (L)) that circulated in the above-mentioned volume of water.

**3.** Method according to claim 2, in which $\eta$ is between 0.8 and 1.

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• GB 1281403 A

**Littérature non-brevet citée dans la description**

• Proceedings of the international radiation protection association. *IPRA 10,* Mai 2005, vol. P-3a-167, 1-5